# EUROPEAN PATENT APPLICATION

(11) **EP 4 769 846 A1**
(43) Date of publication of application: **01.07.2026**
(21) Application number: 24864155.7
(22) Date of filing: 13.06.2024
(51) Int. Cl.: H01R 13/68, H01R 24/00, H01R 13/66, H01F 27/28

(54) **CURRENT-LEAKAGE PROTECTION DEVICE AND TELECOMMUNICATION NETWORK SYSTEM**

(30) Priority: 15.09.2023 CN 202322533687 U
(71) Applicant: HUAWEI TECHNOLOGIES CO., LTD., Shenzhen, Guangdong 518129 (CN)
(72) Inventor: LI, Xuexiang, Shenzhen, Guangdong 518129 (CN); DING, Yu, Shenzhen, Guangdong 518129 (CN); ZHAO, Caijun, Shenzhen, Guangdong 518129 (CN); ZHANG, Mengze, Shenzhen, Guangdong 518129 (CN)
(74) Representative: Goddar, Heinz J.
(86) International application number: PCT/CN2024/098920
(87) International publication number: WO 2025/055430

(57) **Abstract**

This application relates to a current leakage protection apparatus and a telecommunication network system. The current leakage protection apparatus includes a housing, and a first connector and a second connector that are mounted in the housing, where the first connector and the second connector are separately configured to connect to an external device. The current leakage protection apparatus further includes a current leakage protection module. The current leakage protection module is connected in series to the first connector and the second connector. The current leakage protection module includes a current leakage protection component. The current leakage protection component is configured to disconnect a circuit of the current leakage protection component when a current is greater than a preset current, to cut off a leakage current path. That is, a leakage current cannot be conducted to the second connector, to prevent a large leakage current from damaging the external device connected to the current leakage protection apparatus.

## Description

This application claims priority to Chinese Patent Application No. 202322533687.2, filed with the China National Intellectual Property Administration on September 15, 2023 and entitled "CURRENT LEAKAGE PROTECTION APPARATUS AND TELECOMMUNICATION NETWORK SYSTEM", which is incorporated herein by reference in its entirety.

### TECHNICAL FIELD

The present invention relates to the field of communication technologies, and in particular, to a current leakage protection apparatus and a telecommunication network system.

### BACKGROUND

A telecommunication network system includes a telecommunication network device. The telecommunication network device may be a switch. The switch is a network device used to forward an electrical (optical) signal, and can provide an electrical signal path for any two terminal devices that access the switch. That is, the terminal device is connected to the telecommunication network device via a network cable. The terminal device may be a wireless access point (Wireless Access Point, AP), a camera, or the like. During installation of the telecommunication network system, the terminal device is often not properly grounded or the like. Some low-voltage or high-voltage leakage power supplies lead abnormal energy to a network interface of the telecommunication network device through the terminal device or via a connection to the network cable. As a result, the telecommunication network device is damaged, and an Ethernet service is interrupted, affecting normal communication of the device.

### SUMMARY

This application provides a current leakage protection apparatus, where the current leakage protection apparatus includes:
a housing; and
a first connector and a second connector that are mounted in the housing, where the first connector and the second connector are separately configured to connect to an external device.

The current leakage protection apparatus further includes a current leakage protection module, the current leakage protection module is connected in series to the first connector and the second connector, the current leakage protection module includes a current leakage protection component, and the current leakage protection component is configured to disconnect a circuit of the current leakage protection component when a current is greater than a preset current.

In this embodiment, when a leakage current greater than the preset current passes through the current leakage protection apparatus, the circuit of the current leakage protection component is disconnected, to cut off a leakage current path. That is, the leakage current cannot be conducted to the second connector, to prevent the large leakage current from damaging the external device connected to the current leakage protection apparatus. When the current leakage protection apparatus is used in a telecommunication network system, in this embodiment of this application, a network interface current leakage protection apparatus is connected in series between a telecommunication network device and a terminal device, so that the telecommunication network system can have a network interface current leakage protection function without replacing an existing telecommunication network device. In addition, the current leakage protection device does not affect Ethernet signal transmission and power over Ethernet (Power Over Ethernet, POE power supply), and has the network interface current leakage protection function. When the leakage current is greater than the preset current, the current leakage protection module of the network interface current leakage protection device is quickly cut off, to prevent leakage energy from entering the telecommunication network device, thereby resolving a problem of device damage caused by leakage of the telecommunication network device. In addition, because a current leakage protection circuit is distributed inside the current leakage protection device rather than inside the telecommunication network device, a problem that the current leakage protection circuit cannot be disposed in a high-density layout of the electrode plate of the telecommunication network device is avoided.

In a specific embodiment, the current leakage protection module further includes a network interface transformer, and the network interface transformer has a primary-side winding and a secondary-side winding. The first connector is connected to the primary-side winding, the second connector is connected to the secondary-side winding, and the current leakage protection component is connected to a path of the first connector, the network interface transformer, and the second connector. When the current leakage protection apparatus is used in the telecommunication network system, the network interface transformer can not only implement signal transmission between the first connector and the second connector, but also implement Ethernet signal transmission and POE power supply in the telecommunication network system. In addition, the network transformer can further increase a transmission distance of a signal between the first connector and the second connector, and can further perform an electric isolation function, to reduce impact of an external environment on the signal transmitted between the first connector and the second connector, and protect the current leakage protection apparatus.

In a specific embodiment, the primary-side winding has a primary-side center tap, the secondary-side winding has a secondary-side center tap, and two ends of the current leakage protection component are respectively connected to the primary-side center tap and the secondary-side center tap.

In a specific embodiment, the current leakage protection component is connected between the first connector and the primary-side winding, and/or the current leakage protection component is connected between the second connector and the secondary-side winding.

In a specific embodiment, the primary-side winding has a primary-side center tap, and the secondary-side winding has a secondary-side center tap. A first adjustment component is connected between the primary-side center tap and the ground and/or a second adjustment component is connected between the secondary-side center tap and the ground. The first adjustment component and/or the second adjustment component are/is configured to adjust impedance of the primary-side winding and the secondary-side winding, to implement impedance matching between the primary-side winding and the secondary-side winding of the network transformer, and mitigate signal interference.

In a specific embodiment, the first adjustment component includes at least a capacitor, and/or the second adjustment component includes at least a capacitor. In this embodiment, impedance adjustment is implemented by using the ground capacitor. The ground capacitor can provide a stable ground point for the current leakage protection apparatus, to ensure stability and reliability of a circuit of the current leakage protection apparatus. In addition, the ground capacitor can be further configured to filter out a spurious wave.

In a specific embodiment, the current leakage protection component includes one of a fuse, a resistor, and a ferrite bead, or the current leakage protection component includes two or more of a fuse, a resistor, and a ferrite bead, where the two or more of the fuse, the resistor, and the ferrite bead are connected in series or in parallel.

In a specific embodiment, the current leakage protection apparatus further includes a circuit board disposed in the housing, and the current leakage protection module is integrated into the circuit board. The current leakage protection circuit in this embodiment of this application is integrated into the circuit board of the current leakage protection apparatus, instead of being integrated into the circuit board of the telecommunication network device, and is not limited by space of the circuit board of the telecommunication network device. In addition, the integrated current leakage protection apparatus can improve connection reliability between devices of the current leakage protection apparatus.

In a specific embodiment, the current leakage protection apparatus includes a plurality of first connectors, a plurality of first connectors, and a plurality of current leakage protection modules.

An embodiment of this application further provides a telecommunication network system, where the telecommunication network system includes:
a telecommunication network device; and
a current leakage protection apparatus, where the current leakage protection apparatus is the foregoing current leakage protection apparatus.

The telecommunication network device is connected to the first connector, and the second connector is configured to connect to a terminal device.

In a specific embodiment, both the first connector and the second connector are network interface connectors.

It should be understood that the foregoing general descriptions and the following detailed descriptions are merely used as an example, and should not limit this application.

### BRIEF DESCRIPTION OF DRAWINGS

FIG. 1 is a diagram of a telecommunication network system in the conventional technology;
FIG. 2 is a diagram of a structure of a telecommunication network system according to a specific embodiment of this application;
FIG. 3 is a diagram of a structure of a current leakage protection device in FIG. 2 according to a specific embodiment;
FIG. 4 is a diagram of a principle in FIG. 3;
FIG. 5 is a diagram of a principle of a current leakage protection module in FIG. 4 according to a specific embodiment;
FIG. 6 is a diagram of a principle of a current leakage protection module in FIG. 4 according to another specific embodiment;
FIG. 7 is a diagram of a principle of a current leakage protection module in FIG. 4 according to still another specific embodiment;
FIG. 8 is a diagram of a principle of a current leakage protection module in FIG. 4 according to still another specific embodiment; and

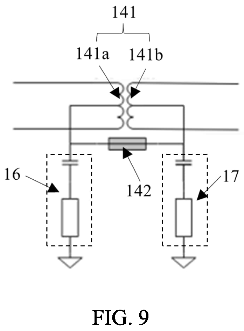

FIG. 9 is a diagram of a principle of a current leakage protection module in FIG. 4 according to still another specific embodiment.

### Reference numerals:

1': first terminal device; 2': second terminal device; 3': telecommunication network device; 4': chip;
1: current leakage protection apparatus;
   11: housing;
   12: first connector;
   13: second connector;
   14: current leakage protection module;
      141: network interface transformer;
         141a: primary-side winding;
         141b: secondary-side winding;
      142: current leakage protection component;
   15: circuit board;
   16: first adjustment component;
   17: second adjustment component;
2: first terminal device;
3: second terminal device;
4: telecommunication network device;
5: rack.

The accompanying drawings herein are incorporated into this specification and constitute a part of this specification, to show embodiments in accordance with this application, and are used, together with this specification, to explain the principle of this application.

### DESCRIPTION OF EMBODIMENTS

To better understand the technical solutions of this application, the following describes embodiments of this application in detail with reference to the accompanying drawings.

In a specific embodiment, the following further describes this application in detail with reference to specific embodiments and the accompanying drawings.

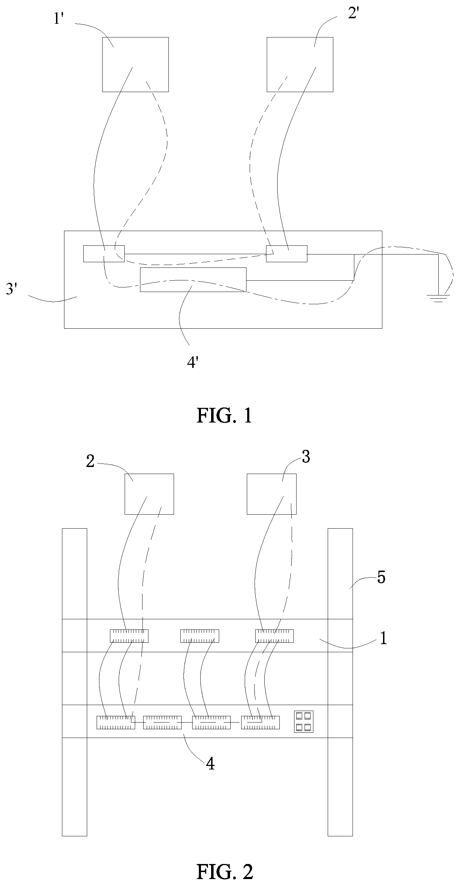

FIG. 1 is a diagram of a module of a telecommunication network system. In FIG. 1, the telecommunication network system includes a telecommunication network device 3', and a first terminal device 1' and a second terminal device 2' are connected to a network interface of the telecommunication network device 3'. The telecommunication network system further includes a port physical layer (Physical Layer, PHY). An Ethernet PHY is a chip, responsible for receiving an electrical (optical) analog signal, and after demodulation and analog-to-digital conversion, sending the signals to a memory for processing. The network interface (for example, an RJ45 interface) of the telecommunication network device 3' may be connected to the PHY chip by using a network transformer. The network transformer can be configured to enhance a signal, so that a transmission distance of the telecommunication network system is longer. In addition, the network transformer can further isolate the PHY chip end from the outside, to improve an anti-interference capability, and protect the PHY chip (for example, prevent a lightning strike). Further, when the PHY chip is connected to network interfaces of different levels, terminal devices connected to the different network interfaces are not affected.

When a leakage current exists in the first terminal device 1' due to a reason such as poor grounding, the leakage current enters, along a network cable, a network interface that is of the telecommunication network device 3' and that is connected to the first terminal device 1'. Because network interfaces of the telecommunication network device 3' are usually short-circuited, the leakage current enters the second terminal device 2' through a network interface that is connected to the second terminal device 2', to form a first leakage current path (as shown by a dashed line in FIG. 1).

In addition, when the leakage current is excessively large and exceeds a through-current that can be borne by a winding of the network transformer, a primary-side winding and a secondary-side winding of the network transformer are burnt, causing a short circuit, and the leakage current is introduced into the PHY chip, to form a second leakage current path (as shown by a dotted line in FIG. 1). When the leakage current enters the PHY chip, the PHY chip is damaged, and the telecommunication network system cannot function.

At present, to solve the problem that the winding of the network transformer is burnt and short-circuited and the PHY chip is damaged due to an excessive leakage current of the telecommunication network device, a fuse is usually connected in series between a center tap of the primary-side winding of the network transformer in the telecommunication network device and a power supply, and a through-current capability of the fuse is configured to be less than a through-current capability of the winding of the network transformer. When the leakage current exceeds the through-current capability of the fuse, the fuse is blown before the winding of the network transformer, thereby cutting off a leakage current path. This prevents the leakage current from burning the winding of the network transformer, thereby preventing the leakage current from being introduced into the PHY chip and causing damage to the chip.

However, in the foregoing solution, the fuse is added to a circuit board of the telecommunication network device. When the network interfaces of the telecommunication network device are dense, space of the circuit board is limited, so that the fuse cannot be arranged on the circuit board. In addition, current leakage protection cannot be provided for a telecommunication network device that has been delivered from a factory.

To resolve the technical problem, an embodiment of this application provides a current leakage protection apparatus. A current leakage protection circuit is disposed in the current leakage protection apparatus, to cut off a leakage current path between a telecommunication network device and a terminal device, thereby protecting the telecommunication network device, and reducing a risk that a leakage current enters a PHY chip due to burning of a winding of a network transformer by an excessive leakage current. In addition, the current leakage protection apparatus and the telecommunication network device are two independent components. In other words, the current leakage protection circuit does not need to be disposed on a circuit board of the telecommunication network device. In this case, there is no problem in disposing the current leakage protection circuit on the telecommunication network device, and a layout of the circuit board of the telecommunication network device is not affected. Further, the independently disposed current leakage protection apparatus can be further used in a telecommunication network device that has been delivered from a factory.

Specifically, FIG. 2 is a diagram of a structure of a telecommunication network system according to a specific embodiment. The telecommunication network system includes a rack 5 and a telecommunication network device 4 (for example, a switch), and the telecommunication network device 4 is mounted on the rack 5. In this embodiment, a first terminal device 2 and a second terminal device 3 access the telecommunication network system, the first terminal device 2 is connected to the telecommunication network device 4 by using a current leakage protection apparatus 1, and the second terminal device 3 is connected to the telecommunication network device 4 by using the current leakage protection apparatus 1. When a small leakage current exists in the first terminal device 2 due to a reason such as poor grounding, the leakage current is conducted to the current leakage protection apparatus 1. When the leakage current is small, a current leakage protection circuit of the current leakage protection apparatus 1 is not blown, so that the small leakage current is conducted to a network interface that is of the telecommunication network device 4 and that is connected to (connected by using the current leakage protection apparatus 1) the first terminal device 2. Because network interfaces of the telecommunication network device 4 are short-circuited, the leakage current can be conducted to a network interface connected to the second terminal device 3. Then, the current leakage protection apparatus 1 conducts the leakage current to the second terminal device 3 for discharging, and a leakage current path of the small leakage current is shown by a dashed line shown in FIG. 2. When a large leakage current exists in the first terminal device 2 due to the reason such as poor grounding, the large leakage current is conducted to the current leakage protection apparatus 1, so that the current leakage protection circuit of the current leakage protection apparatus 1 is blown, thereby cutting off a leakage current path, preventing the leakage current from being conducted to the telecommunication network device 4 through the leakage current path shown in FIG. 2, and preventing the large leakage current from damaging a PHY chip.

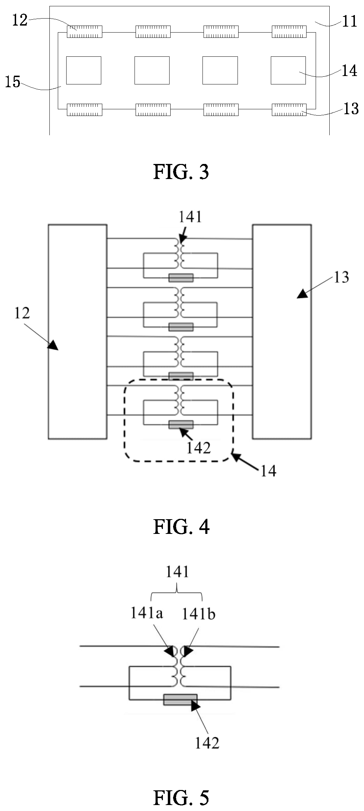

In a specific embodiment, FIG. 3 is a diagram of a structure of a current leakage protection apparatus according to a specific embodiment. As shown in FIG. 3, the current leakage protection apparatus 1 includes a housing 11, a first connector 12, and a second connector 13. The first connector 12 and the second connector 13 are disposed in the housing 11, and the first connector 12 and the second connector 13 are configured to connect to an external device. In the embodiment shown in FIG. 2, the first connector 12 and the second connector 13 are respectively configured to connect to a terminal device and the telecommunication network device 4. The first connector 12 and the second connector 13 may be common connectors in this field. For example, when the current leakage protection apparatus 1 is used in a telecommunication network system, the first connector 12 and the second connector 13 may be network interface connectors. Types and structures of the first connector 12 and the second connector 13 are not limited in this application.

As shown in FIG. 3, the current leakage protection apparatus further includes a current leakage protection module 14. The current leakage protection module 14 is connected in series to the first connector 12 and the second connector 13, and is configured to disconnect a circuit of the current leakage protection module 14 when a current is greater than a preset current.

Specifically, FIG. 4 is a schematic of a circuit of a current leakage protection module according to a specific embodiment. The current leakage protection module 14 includes a coupling device. The first connector 12 and the second connector 13 are connected by using the coupling device. The coupling device is configured to implement signal transfer between the first connector 12 and the second connector 13. Therefore, a connection between the coupling device and both the first connector 12 and the second connector 13 may be an electrical connection, a signal connection, or a coupling connection, provided that the signal transfer between the first connector 12 and the second connector 13 can be implemented. In this embodiment, two ends of the coupling device are respectively connected to two ends of a current leakage protection component 142, and a circuit of the current leakage protection component 142 is configured to be disconnected when a current is greater than a preset current, to disconnect a loop between the coupling device and the current leakage protection component 142, so as to disconnect the signal transfer between the first connector 12 and the second connector 13 that are connected to the coupling device, cut off the leakage current path of the telecommunication network system shown in FIG. 2, and prevent a PHY chip from being damaged due to conduction of a large leakage current to the telecommunication network device.

In this embodiment, the coupling device connecting the first connector 12 and the second connector 13 can be selected based on an application scenario of the current leakage protection apparatus.

In a specific embodiment, one current leakage protection module 14 may be disposed between the first connector 12 and the second connector 13, to simplify a structure of the current leakage protection apparatus. In another embodiment, as shown in FIG. 3, each of the first connector 12 and the second connector 13 may include a plurality of network interfaces. The current leakage protection apparatus may include a plurality of current leakage protection modules 14 disposed between the first connector 12 and the second connector 13. When a leakage current passes through any current leakage protection module 14, a leakage protection circuit of the current leakage protection module 14 can be blown, to quickly cut off a leakage current path, thereby protecting the telecommunication network device 4.

In the embodiment shown in FIG. 4, when the telecommunication network system is a gigabit network interface, four groups of current leakage protection modules 14 are disposed between one first connector 12 and one second connector 13. Therefore, when the current leakage protection apparatus is used in the telecommunication network system, a quantity of current leakage protection modules 14 may be set based on an actual requirement.

In a specific embodiment, FIG. 5 is a diagram of a structure of a current leakage protection module 14 according to a specific embodiment. The coupling device in this embodiment may be specifically a network interface transformer 141. When the current leakage protection apparatus is used in the telecommunication network system, the network interface transformer 141 can not only implement signal transmission between the first connector 12 and the second connector 13, but also implement Ethernet signal transmission and power over Ethernet (Power Over Ethernet, POE power supply) in the telecommunication network system. In addition, the network transformer can further increase a transmission distance of a signal between the first connector 12 and the second connector 13, and can further perform an electric isolation function, to reduce impact of an external environment on the signal transmitted between the first connector 12 and the second connector 13, and protect the current leakage protection apparatus.

As shown in FIG. 5, the network interface transformer 141 includes a primary-side winding 141a and a secondary-side winding 141b. When the network interface transformer 141 operates, a current passes through the primary-side winding 141a, and an induced current is generated in the secondary-side winding 141b under effect of electromagnetic induction, to implement coupling between the primary-side winding 141a and the secondary-side winding 141b. The primary-side winding 141a is connected to the first connector 12, and the secondary-side winding 141b is connected to the second connector 13. Therefore, the first connector 12, the network interface transformer 141, and the second connector 13 are connected to form a path.

In this embodiment, the current leakage protection component 142 is located on the path formed by connecting the first connector 12, the network interface transformer 141, and the second connector 13. When a leakage current passing through the current leakage protection apparatus is large and exceeds a through-current capability of the current leakage protection component 142, the current leakage protection component 142 is blown, to disconnect the current leakage protection circuit and cut off a leakage current path, thereby preventing the leakage current from being introduced into the telecommunication network device 4 through the current leakage protection apparatus 1.

In conclusion, when the current leakage protection apparatus 1 in this embodiment is used in the telecommunication network device, the current leakage protection apparatus 1 can protect the telecommunication network device 4 and prevent a signal transmission failure caused by a leakage current being introduced into the PHY chip. In addition, the current leakage protection apparatus 1 and the telecommunication network device 4 are mutually independent components. Therefore, the current leakage protection circuit of the current leakage protection apparatus 1 does not occupy space of a circuit board of the telecommunication network device 4, and is not affected by the space of the circuit board of the telecommunication network device 4. In addition, the current leakage protection apparatus 1 can further ensure that the telecommunication network system implements Ethernet signal transmission and power over Ethernet.

In a specific embodiment, as shown in FIG. 5, the primary-side winding 141a has a primary-side center tap, the secondary-side winding 141b has a secondary-side center tap, and the two ends of the current leakage protection component 142 are respectively connected to the primary-side center tap and the secondary-side center tap, so that the current leakage protection component 142, the primary-side center tap, and the secondary-side center tap form the current leakage protection circuit. In this embodiment, the current leakage protection component 142 can cut off an induced current formed by the primary-side winding 141a on the secondary-side winding 141b, thereby cutting off a leakage current path.

In another specific embodiment, the current leakage protection component 142 is disposed between the first connector 12 and the primary-side winding 141a, and/or the current leakage protection component 142 is disposed between the second connector 13 and the secondary-side winding 141b.

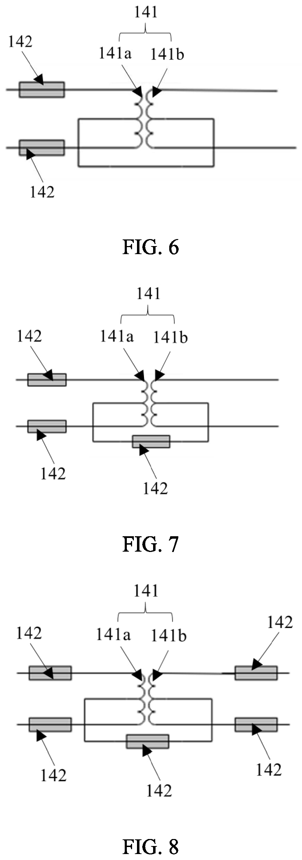

In an embodiment shown in FIG. 6, when the current leakage protection component 142 is disposed between the first connector 12 and the primary-side winding 141a, the first connector 12, the current leakage protection component 142, and the primary-side winding 141a form the current leakage protection circuit. When a leakage current exceeds the through-current capability of the current leakage protection component 142, the current leakage protection component 142 can cut off the current leakage protection circuit, to disconnect the first connector 12 from the primary-side winding 141a.

When the current leakage protection component 142 is disposed between the second connector 13 and the secondary-side winding 141b, the secondary-side winding 141b, the current leakage protection component 142, and the second connector 13 form the current leakage protection circuit. When a leakage current exceeds the through-current capability of the current leakage protection component 142, the current leakage protection component 142 can cut off the current leakage protection circuit, to disconnect the second connector 13 from the secondary-side winding 141b.

In an embodiment shown in FIG. 7, the current leakage protection component 142 is disposed between the first connector 12 and the primary-side winding 141a, and the current leakage protection component 142 is disposed between the primary-side center tap and the secondary-side center tap. The current leakage protection component 142, the primary-side center tap, and the secondary-side center tap form a first current leakage protection circuit. The first connector 12, the current leakage protection component 142, and the primary-side winding 141a form a second current leakage protection circuit. The current leakage protection apparatus in this embodiment includes the two current leakage protection circuits, and a leakage current path can be cut off when any current leakage protection circuit is disconnected, thereby further improving reliability of a current leakage protection function of the current leakage protection apparatus.

In an embodiment shown in FIG. 8, the current leakage protection component 142 is disposed between the first connector 12 and the primary-side winding 141a, the current leakage protection component 142 is disposed between the primary-side center tap and the secondary-side center tap, and the current leakage protection component 142 is disposed between the second connector 13 and the secondary-side winding 141b. The current leakage protection component 142, the primary-side center tap, and the secondary-side center tap form the first current leakage protection circuit. The first connector 12, the current leakage protection component 142, and the primary-side winding 141a form the second current leakage protection circuit. The secondary-side winding 141b, the current leakage protection component 142, and the second connector 13 form a third current leakage protection circuit. The current leakage protection apparatus in this embodiment includes the three current leakage protection circuits, and a leakage current path can be cut off when any current leakage protection circuit is disconnected, thereby further improving reliability of a current leakage protection function of the current leakage protection apparatus.

In conclusion, in this embodiment of this application, the current leakage protection component 142 only needs to be disposed on a connection path between the first connector 12 and the second connector 13 to cut off a leakage current path. A specific position at which the current leakage protection component 142 is disposed and a quantity of current leakage protection components 142 are not limited.

In the foregoing embodiments, the current leakage protection component 142 includes one of a fuse, a resistor, and a ferrite bead, or the current leakage protection component 142 includes two or more of a fuse, a resistor, and a ferrite bead, where the two or more of the fuse, the resistor, and the ferrite bead are connected in series or in parallel. A device type and a serial-parallel relationship of the current leakage protection component 142 are not limited in this application, provided that the current leakage protection component 142 can be blown when a current is greater than the preset current.

In a specific embodiment, as shown in FIG. 6, the current leakage protection apparatus further includes a first adjustment component 16 and/or a second adjustment component 17. The first adjustment component 16 is connected between the primary-side center tap of the network transformer and the ground, and/or the second adjustment component 17 is connected between the secondary-side center tap of the network transformer and the ground. The first adjustment component 16 is configured to adjust impedance of the primary-side winding 141a of the network transformer, and/or the second adjustment component 17 is configured to adjust impedance of the secondary-side winding 141b of the network transformer, to implement impedance matching between the primary-side winding 141a and the secondary-side winding 141b of the network transformer, and mitigate signal interference.

The first adjustment component 16 may include a capacitor, where one end of the capacitor is connected to the primary-side winding 141a, and the other end of the capacitor is grounded; and/or the second adjustment component 17 may include a capacitor, where one end of the capacitor is connected to the secondary-side winding 141b, and the other end of the capacitor is grounded. Therefore, in this embodiment, impedance adjustment is implemented by using the ground capacitor. The ground capacitor can provide a stable ground point for the current leakage protection apparatus, to ensure stability and reliability of a circuit of the current leakage protection apparatus. In addition, the ground capacitor can be further configured to filter out a spurious wave.

Specifically, as shown in FIG. 6, in addition to the capacitor, the first adjustment component 16 and/or the second adjustment component 17 may further include one or more of a resistor, a fuse, and a ferrite bead, where the one or more of the resistor, the fuse, and the ferrite bead are connected in series or in parallel.

In the embodiment shown in FIG. 6, the current leakage protection apparatus includes the first adjustment component 16 and the second adjustment component 17, and each of the first adjustment component 16 and the second adjustment component 17 include the capacitor.

In the foregoing embodiments, as shown in FIG. 3, the current leakage protection apparatus 1 further includes a circuit board 15 disposed in the housing 11. The circuit board 15 may be a printed circuit board (Printed Circuit Board, PCB), and the current leakage protection module 14 is integrated into the circuit board 15. Specifically, the coupling device, the current leakage protection component 142, the first adjustment component 16, and the second adjustment component 17 are all integrated into the circuit board 15.

Therefore, the current leakage protection circuit in this embodiment of this application is integrated into the circuit board 15 of the current leakage protection apparatus 1, instead of being integrated into the circuit board of the telecommunication network device 4, and is not limited by the space of the circuit board of the telecommunication network device 4. In addition, the integrated current leakage protection apparatus can improve connection reliability between devices of the current leakage protection apparatus 1.

In addition, as shown in FIG. 4, when the current leakage protection apparatus 1 is used in the telecommunication network system, both the first connector 12 and the second connector 13 are network interface connectors. The network interface connectors may be various network interface connectors in this field, and a quantity of network interfaces in the network interface connectors may be set based on actual requirements.

A concept of the solutions of this application is as follows: Currently, a telecommunication network device usually does not have a network interface current leakage protection capability, or a current leakage protection circuit needs to be integrated on a circuit board of the telecommunication network device. Because space of the circuit board of the telecommunication network device is limited, there is a risk that the current leakage protection circuit cannot be deployed. In embodiments of this application, a network interface current leakage protection apparatus is connected in series between a telecommunication network device and a terminal device, so that a telecommunication network system can have a network interface current leakage protection function without replacing the existing telecommunication network device. In addition, the current leakage protection device does not affect Ethernet signal transmission and POE power supply, and has the network interface current leakage protection function. When a leakage current is greater than a preset current, a current leakage protection module of the network interface current leakage protection device is quickly cut off, to prevent leakage energy from entering the telecommunication network device, thereby resolving a problem of device damage caused by leakage of the telecommunication network device. In addition, because a current leakage protection circuit is distributed inside the current leakage protection device rather than inside the telecommunication network device, a problem that the current leakage protection circuit cannot be disposed in a high-density layout of the electrode plate of the telecommunication network device is avoided.

It should be noted that the current leakage protection apparatus in the foregoing embodiments can be used in the telecommunication network system, and may also be used in another system. The current leakage protection apparatus can be used in any field that has a current leakage protection requirement. For example, the current leakage protection apparatus may be used for current leakage protection of a power-consuming device.

The foregoing descriptions are merely specific implementations of embodiments of this application, but are not intended to limit the protection scope of embodiments of this application. Any variation or replacement within the technical scope disclosed in embodiments of this application shall fall within the protection scope of embodiments of this application. Therefore, the protection scope of embodiments of this application shall be subject to the protection scope of the claims.

## Claims

1. A current leakage protection apparatus, wherein the current leakage protection apparatus comprises:
a housing; and
a first connector and a second connector that are mounted in the housing, wherein the first connector and the second connector are separately configured to connect to an external device; and
the current leakage protection apparatus further comprises a current leakage protection module, the current leakage protection module is connected in series to the first connector and the second connector, the current leakage protection module comprises a current leakage protection component, and the current leakage protection component is configured to disconnect a circuit of the current leakage protection component when a current is greater than a preset current.

2. The current leakage protection apparatus according to claim 1, wherein the current leakage protection module further comprises a network interface transformer, the network interface transformer has a primary-side winding and a secondary-side winding, the first connector is connected to the primary-side winding, the second connector is connected to the secondary-side winding, and the current leakage protection component is connected to a path of the first connector, the network interface transformer, and the second connector.

3. The current leakage protection apparatus according to claim 2, wherein the primary-side winding has a primary-side center tap, the secondary-side winding has a secondary-side center tap, and two ends of the current leakage protection component are respectively connected to the primary-side center tap and the secondary-side center tap.

4. The current leakage protection apparatus according to claim 2, wherein the current leakage protection component is connected between the first connector and the primary-side winding, and/or the current leakage protection component is connected between the second connector and the secondary-side winding.

5. The current leakage protection apparatus according to claim 2, wherein the primary-side winding has a primary-side center tap, the secondary-side winding has a secondary-side center tap, a first adjustment component is connected between the primary-side center tap and a ground and/or a second adjustment component is connected between the secondary-side center tap and the ground, and the first adjustment component and/or the second adjustment component are/is configured to adjust impedance of the primary-side winding and the secondary-side winding.

6. The current leakage protection apparatus according to claim 5, wherein the first adjustment component comprises at least a capacitor, and/or the second adjustment component comprises at least a capacitor.

7. The current leakage protection apparatus according to any one of claims 1 to 6, wherein the current leakage protection component comprises one of a fuse, a resistor, and a ferrite bead, or the current leakage protection component comprises two or more of a fuse, a resistor, and a ferrite bead, wherein the two or more of the fuse, the resistor, and the ferrite bead are connected in series or in parallel.

8. The current leakage protection apparatus according to any one of claims 1 to 6, wherein the current leakage protection apparatus further comprises a circuit board disposed in the housing, and the current leakage protection module is integrated into the circuit board.

9. The current leakage protection apparatus according to any one of claims 1 to 6, wherein the current leakage protection apparatus comprises a plurality of first connectors, a plurality of first connectors, and a plurality of current leakage protection modules.

10. A telecommunication network system, wherein the telecommunication network system comprises:
a telecommunication network device; and
a current leakage protection apparatus, wherein the current leakage protection apparatus is the current leakage protection apparatus according to any one of claims 1 to 9; and
the telecommunication network device is connected to the first connector, and the second connector is configured to connect to a terminal device.

11. The telecommunication network system according to claim 10, wherein both the first connector and the second connector are network interface connectors.
